# DEMANDE DE BREVET EUROPEEN

(11) **EP 0 849 447 A1**
(43) Date de publication de la demande: **24.06.1998**
(21) Numéro de dépôt: 97402941.5
(22) Date de dépôt: 05.12.1997
(51) Int. Cl.: F01P 5/06, B60K 11/04

(54) **Agencement pour le refroidissement indirect du moteur d'un autocar**

(30) Priorité: 20.12.1996 FR 9615723
(71) Demandeur: RENAULT VEHICULES INDUSTRIELS, 69003 Lyon (FR)
(72) Inventeur: Tap, Paul, 69100 Villeurbanne (FR)
(74) Mandataire: Fernandez, Francis

(57) **Abrégé**

L'invention propose un agencement pour le refroidissement indirect d'un moteur (18) à combustion d'un véhicule automobile, notamment d'un véhicule de transport en commun, du type comportant un échangeur thermique air-fluide (20) dans lequel circule un fluide de refroidissement du moteur et qui est traversé par un flux d'air refroidisseur dont la circulation est forcée par un ventilateur (22), et du type dans lequel le circuit de circulation d'air forcé comporte une prise d'air (26) agencée dans une première paroi (12) du véhicule et une sortie d'air (34) agencée dans une deuxième paroi (14) d'orientation sensiblement perpendiculaire à la première paroi (12), caractérisé en ce que le ventilateur (22) est une turbine centrifuge dont l'axe de rotation (X-X) et d'entrée axiale de l'air est perpendiculaire à la première paroi (12) et dont le flux centrifuge de sortie d'air est canalisé pour déboucher selon une direction sensiblement tangentielle, perpendiculaire à la deuxième paroi (14).

## Description

La présente invention concerne un agencement pour le refroidissement d'un moteur à combustion d'un véhicule.

L'invention concerne plus particulièrement un agencement pour le refroidissement du moteur appartenant au groupe motopropulseur d'un véhicule de transport en commun tel qu'un autocar ou un autobus.

Il existe deux grands principes de refroidissement des moteurs à combustion des véhicules automobiles.

Le premier consiste à refroidir directement le moteur par un flux d'air forcé de refroidissement.

La seconde solution consiste à refroidir indirectement le moteur en faisant circuler dans ce dernier un fluide de refroidissement tel que par exemple de l'eau et/ou de l'huile, et à refroidir séparément ce fluide au moyen d'un échangeur thermique tel que par exemple un radiateur air-eau.

Ainsi, selon une conception connue, un agencement pour le refroidissement indirect d'un moteur d'un véhicule de transport en commun est du type comportant un échangeur thermique air-fluide dans lequel circule un fluide de refroidissement du moteur et qui est traversé par un flux d'air refroidisseur dont la circulation est forcée par un ventilateur.

Pour des raisons d'aménagement du véhicule de transport en commun et d'implantation de son groupe motopropulseur, le circuit de circulation d'air forcé comporte une prise d'aspiration d'air agencée à la partie arrière d'une paroi latérale du véhicule et une sortie de refoulement d'air agencée dans une deuxième paroi d'orientation sensiblement perpendiculaire à la première paroi latérale qui est généralement constituée par la paroi transversale arrière du véhicule.

Ce type d'architecture classique d'un autocar ou d'un autobus est peu propice à l'écoulement général de l'air de refroidissement et à l'utilisation d'un ventilateur constitué par une turbine du type axial, l'agencement créant de plus des turbulences.

Le flux d'air forcé est difficile à canaliser et le mauvais rendement des ventilateurs axiaux conduit à une consommation de puissance élevée prélevée sur le moteur du véhicule.

Il est par ailleurs apparu nécessaire d'améliorer les performances générales des groupes de refroidissement de ce type de véhicule en commun afin d'en réduire le coût de fabrication, le poids, la puissance prélevée sur le moteur ainsi que le niveau de bruit émis par le groupe de refroidissement.

Afin de résoudre ces problèmes et d'améliorer globalement les performances du groupe de refroidissement, l'invention propose un agencement du type mentionné précédemment, caractérisé en ce que le ventilateur est une turbine centrifuge dont l'axe de rotation et d'entrée axiale de l'air est perpendiculaire à la première paroi et dont le flux centrifuge de sortie d'air est canalisé pour déboucher selon une direction sensiblement tangentielle, perpendiculaire à la deuxième paroi.

L'utilisation d'un ventilateur du type centrifuge présente de nombreux avantages.

Il s'agit d'abord d'une turbine à rendement élevé par rapport aux hélicoïdes, de l'ordre de 70 à 80% au lieu de 25 à 30% pour ces dernières.

Une turbine centrifuge fonctionne avec des débits faibles mais avec des pertes de charge plus importantes, ce qui est particulièrement approprié lorsque l'échangeur thermique associé au ventilateur est un radiateur à grande surface d'échange qui fait appel à un faisceau de tubes très dense qui permet par ailleurs de ne pas augmenter la surface frontale du radiateur et donc son encombrement.

La conception d'un ventilateur du type centrifuge est telle que son entrée d'air axiale est « naturellement » perpendiculaire à sa sortie de refoulement, et ceci sans créer de turbulences parasites.

L'écoulement au niveau du refoulement est facile à canaliser et il n'est pas perturbé par des effets de tourbillon.

Enfin, l'enveloppe du ventilateur constitue elle-même des moyens pour canaliser la circulation de l'air et cela évite de recourir à des pièces supplémentaires de tôlerie.

Selon d'autres caractéristiques de l'invention :
- l'échangeur thermique est sensiblement plan et il est agencé en amont du ventilateur dans un plan sensiblement parallèle à celui de la première paroi ;
- la face arrière de sortie de l'échangeur est reliée à l'entrée axiale de la turbine centrifuge par un carénage amont en forme de manchette ;
- le flux centrifuge de sortie de la turbine est canalisé par un carénage périphérique aval en forme de goulotte périphérique qui débouche tangentiellement ;
- la première paroi est une paroi latérale arrière du véhicule, et la deuxième paroi est une paroi transversale arrière du véhicule ;
- les première et deuxième parois sont verticales ;
- l'agencement comporte un bâti tubulaire formant châssis qui porte l'échangeur, le ventilateur et le groupe motopropulseur du véhicule ;
- le ventilateur est disposé au dessus du groupe motopropulseur, avec son axe de rotation parallèle à l'axe du vilebrequin du moteur.

D'autres caractéristiques et avantages de l'invention apparaîtront à la lecture de la description détaillée qui suit pour la compréhension de laquelle on se reportera aux dessins annexés dans lesquels :
- la figure 1 est un schéma illustrant le principe de conception et d'implantation d'un groupe de refroidissement conforme aux enseignements de l'invention ; et
- la figure 2 est une vue schématique en perspective illustrant un bâti formant châssis qui porte les principaux composants d'un groupe de refroidissement agencé conformément aux enseignements de l'invention, en association avec le groupe motopropulseur d'un autocar.

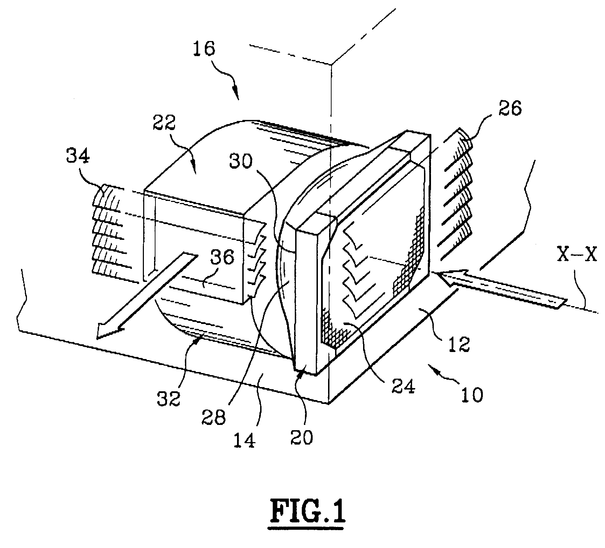

On a représenté sur la figure 1 la partie arrière droite 10 d'un autocar qui est délimitée par une première paroi latérale arrière 12, de droite, qui s'étend sensiblement verticalement et parallèlement à l'axe longitudinal général du véhicule.

Cette partie arrière est aussi délimitée par la paroi transversale arrière 14 du véhicule qui est d'orientation verticale et qui s'étend dans un plan transversal perpendiculaire à celui dans lequel s'étend la paroi latérale arrière 12, ces deux éléments étant constitués par exemple par des panneaux de carrosserie.

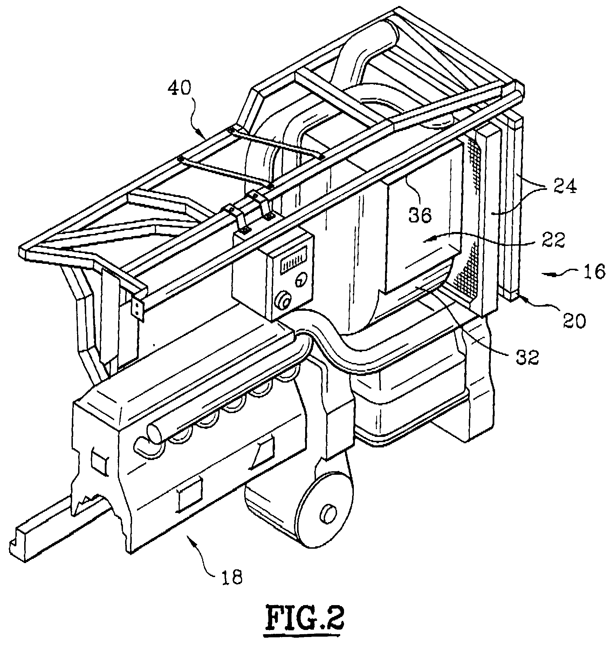

C'est dans le volume interne délimité notamment par les parois 12 et 14 qu'est disposé un groupe 16 pour le refroidissement du groupe motopropulseur 18 (voir figure 2) du véhicule.

Le groupe de refroidissement 16 est constitué pour l'essentiel par un échangeur thermique 20 et par un ventilateur 22.

Selon une conception connue, et comme on peut le voir plus en détails sur la figure 2, l'échangeur thermique 20 est constitué par l'association de radiateurs 24, du type à faisceaux denses de tube, qui sont de forme générale rectangulaire et plane et qui s'étendent globalement dans un plan parallèle à la paroi latérale arrière verticale de droite 12.

L'échangeur thermique 20 est disposé en amont du ventilateur 22, c'est-à-dire que de l'air extérieur au véhicule traverse une persienne 26 formée en regard de l'échangeur 20 dans la paroi latérale arrière 12 puis il traverse l'échangeur 20 selon la flèche illustrée à la partie droite de la figure 1.

Cette circulation d'air forcé à travers l'échangeur 20 est obtenue par l'action du ventilateur 22 qui, conformément aux enseignements de l'invention, est une turbine du type centrifuge, c'est-à-dire que l'entrée d'air est orientée axialement selon l'axe X-X de rotation de la roue de turbine centrifuge (non représentée sur les figures) du ventilateur 22.

Afin d'aspirer l'air à travers l'échangeur 20, le ventilateur 22 comporte un carénage 28 en forme de manchette tronconique qui relie la face plane arrière 30 de l'échangeur 20 à une autre partie 32 du carénage du ventilateur 22 en direction de l'entrée centrale axiale de la roue de turbine.

Le ventilateur 22 est du type centrifuge, c'est-à-dire que l'air aspiré au niveau de son entrée centrale axiale est centrifugé radialement vers l'extérieur, et l'air ainsi centrifugé est refoulé à travers une persienne 34 formée dans la paroi transversale arrière 14.

A cet effet, la seconde partie 32 du carénage du ventilateur 22 est une goulotte qui entoure la périphérie de la roue centrifuge du ventilateur et qui comporte une sortie 36, ici de contour rectangulaire, qui s'étend dans un plan parallèle à la face transversale arrière 14 et qui permet une évacuation de l'air chaud aspiré selon la flèche de la partie gauche de la figure 1, c'est-à-dire selon une direction sensiblement tangentielle par rapport à l'axe X-X de rotation de la roue de la turbine.

Comme on peut le voir sur la figure 2, la partie arrière de l'autocar délimitée par les parois 12 et 14 peut comporter un châssis tubulaire 40 sous lequel sont fixés l'échangeur 20 et le groupe de refroidissement 16, le groupe motopropulseur 18 étant agencé en position basse et étant lui-même porté par le châssis tubulaire 40, l'ensemble présentant une forme globale parallélépipédique rectangle qui peut être aisément aménagée à l'arrière de l'autocar.

Dans l'exemple de réalisation décrit à la figure 2, le ventilateur est disposé au dessus du moteur et de sa transmission avec son axe X-X parallèle à l'axe de rotation du vilebrequin, ce qui facilite l'entraînement en rotation du ventilateur à partir du moteur. Bien évidemment cette disposition n'est pas limitative de l'invention.

La conception selon l'invention, outre les avantages qui ont été mentionnés précédemment, permet à puissance égale consommée par le ventilateur, et avec une surface frontale des radiateurs réduite de 15%, d'accroître la puissance thermique évacuée d'environ 30%, la masse globale du groupe de refroidissement pouvant par ailleurs être réduite d'environ 30%.

A titre d'exemple, pour une puissance prélevée de 10 kilowatts pour l'entraînement du ventilateur 22, il est possible d'évacuer une puissance de 186 kilowatts avec une surface frontale de radiateur de 50 dm².

## Revendications

1. Agencement pour le refroidissement indirect d'un moteur (18) à combustion d'un véhicule automobile, notamment d'un véhicule de transport en commun, du type comportant un échangeur thermique air-fluide (20) dans lequel circule un fluide de refroidissement du moteur et qui est traversé par un flux d'air refroidisseur dont la circulation est forcée par un ventilateur (22), et du type dans lequel le circuit de circulation d'air forcé comporte une prise d'air (26) agencée dans une première paroi (12) du véhicule et une sortie d'air (34) agencée dans une deuxième paroi (14) d'orientation sensiblement perpendiculaire à la première paroi (12), caractérisé en ce que le ventilateur (22) est une turbine centrifuge dont l'axe de rotation (X-X) et d'entrée axiale de l'air est perpendiculaire à la première paroi (12) et dont le flux centrifuge de sortie d'air est canalisé pour déboucher selon une direction sensiblement tangentielle perpendiculaire à la deuxième paroi (14) et en ce que l'échangeur thermique (20) est sensiblement plan et est agencé en amont du ventilateur (22) dans un plan sensiblement parallèle à celui de la première paroi (12), la face arrière (30) de sortie de l'échangeur (20) étant reliée à l'entrée axiale de la turbine centrifuge par un carénage amont (28) en forme de manchette.

2. Agencement selon la revendication 1, caractérisé en ce que le flux centrifuge de sortie de la turbine est canalisé par un carénage périphérique aval (32) en forme de goulotte périphérique qui débouche tangentiellement.

3. Agencement selon l'une quelconque des revendications précédentes, caractérisé en ce que ladite première paroi (12) est une paroi latérale arrière du véhicule, et en ce que ladite deuxième paroi (14) est une paroi transversale arrière du véhicule.

4. Agencement selon l'une quelconque des revendications précédentes, caractérisé en ce que lesdites première (12) et deuxième (14) parois sont verticales.

5. Agencement selon l'une quelconque des revendications précédentes, caractérisé en ce qu'il comporte un bâti tubulaire formant châssis (40) qui porte l'échangeur (20), le ventilateur (22) et le groupe motopropulseur (18) du véhicule.

6. Agencement selon la revendication 5, caractérisé en ce que le ventilateur (22) est disposé au dessus du groupe motopropulseur (18), avec son axe de rotation (X-X) parallèle à l'axe du vilebrequin du moteur
